# EUROPEAN PATENT SPECIFICATION

(11) **EP 1 739 922 B1**
(45) Date of publication and mention of the grant of the patent: **17.09.2008**
(21) Application number: 06116149.3
(22) Date of filing: 27.06.2006
(51) Int. Cl.: H04L 29/06, H04L 29/08

(54) **A gateway control agent and its implementation method**
Ein Gateway Control Agent und dessen Implementierungsmethode
Un agent de contrôle de passerelle et sa méthode d'implémentation

(30) Priority: 28.06.2005 CN 200510035617
(43) Date of publication of application: 03.01.2007
(73) Proprietor: Huawei Technologies Co., Ltd., Longgang District, Shenzhen Guangdong 518129 (CN)
(72) Inventor: Yangbo, Lin Huawei Technologies, Shenzhen, Guangdong Province 518129 (CN)
(74) Representative: Plougmann & Vingtoft A/S

(56) References cited:
- WO-A-20/05018188
- ROSEN B: "VOIP GATEWAYS AND THE MEGACO ARCHITECTURE" BT TECHNOLOGY JOURNAL, SPRINGER, DORDRECHT, NL, vol. 19, no. 2, 1 April 2001 (2001-04-01), pages 66-76, XP001034589 ISSN: 1358-3948
- CHIH YUAN HUNG ET AL: "The implementation of the communication framework of SIP and MGCP in VoIP applications" NETWORKS, 2002. ICON 2002. 10TH IEEE INTERNATIONAL CONFERENCE ON AUG 27-30, 2002, PISCATAWAY, NJ, USA,IEEE, 27 August 2002 (2002-08-27), pages 449-454, XP010603658 ISBN: 0-7803-7533-5

## Description

### Field of the Invention

The present invention relates to a gateway control agent (GCA) technology in networks, and more particularly to a GCA based on H.248 protocol and its implementation method.

### Background of the Invention

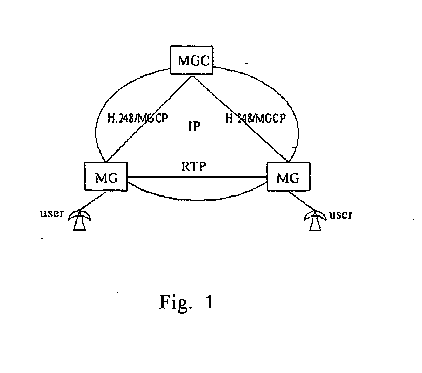

The media gateway controller (MGC) and the media gateway (MG) are the two key components in the packet network. The MGC is responsible for the call control function and the MG is responsible for the service bearer function, therefore the call control plane and the service bearer plane are separated so as to fully share the network resources, to simplify the equipment update and service expansion, and to greatly reduce the development and maintenance cost. Figure 1 is the schematic diagram of a kind of MGC and MG networking in the packet network.

The media gateway control protocol (MGCP) is the main protocol applied for the communication between the MG and MGC. Currently H.248/MeGaCo and MGCP are the two comparatively widely used protocols. The MGCP protocol was instituted by Internet Engineering Task Force (IETF) in October 1999 and amended in January 2003. H.248/MeGaCo protocol was instituted by IETF together with International Telecommunications Union (ITU) in November 2000 and amended in June 2003.

Taking H.248 protocol as an example, different resources on the MG are generally referred as a termination, which can be classified into physical terminations and ephemeral terminations. The physical termination represents half-permanent physical entity, such as the time division multiplex (TDM) channel etc.. The ephemeral termination represents common resource which is temporarily applied and released after usage, such as the real-time transport protocol (RTP) stream etc.. The combination of the terminations is generally referred as a context. The context may comprise a plurality of terminations thus topology is adopted to represent the relations between terminations. Based on the abstract model of the protocol, the connection of a call indeed is the operation on the termination and context.

The aforementioned operation is implemented by the Command Request and Reply between the MGC and MG. The Command types comprise Add, Modify, Subtract, Move, AuditValue, AuditCapabilities, Notify and ServiceChange. The command parameter, also referred as the Descriptor, is sorted as Property, Signal, Event and Statistic. The parameters with service correlation are logically aggregated into a Package.

The original model of H.248 protocol is oriented to MGC-MG control pair, i.e. the MGC knows the resource status on the MG and directly controls the MG. However, with the separation of the control plane and the bearer plane, it seems complicated and trivial for the MGC to directly control the MG, which is not convenient to hierarchically control and to simplify operations.

The concept of a signalling agent in MGCP/MEGACO is known from WO 2005/018188.

### Summary of the Invention

The object of present invention is to provide a gateway control agent and its implementation method, which can make the control of the MG by the MGC more simple and effective.

The technical solution of the present invention is to provide a GCA according to claim 1, the gateway control agent is set between the media gateway controller and a plurality of media gateways in the packet network and establishes the mapping relations between the media gateway controller and the media gateways; and the media gateway controller uniformly requests for a certain service from the gateway control agent, the gateway control agent selects the appropriate resource capabilities among the media gateways managed by it and performs mapping between a single media gateway region and the media gateway set region represented by the gateway control agent such that the control operation by the media gateway controller on the resource capabilities in the media gateway set region represented by the gateway control agent is mapped to the resource capabilities of the single media gateway region by the gateway control agent.

Wherein, the mapping relations between the media gateway controller and the media gateways comprise the mapping for varied resource capabilities.

Wherein, the gateway control agent, representing the media gateway set, identifies or operates a certain resource capability in response to the request from the media gateway controller, the media gateway, representing itself, identifies or operates a certain resource capability in response to the request from the gateway control agent, and the gateway control agent establishes mapping relations between the resource capability identified by the gateway control agent and that identified by the media gateway and the mapping relations are accordingly corresponded to the operations.

The one-to-one correspondence of the resource capability on a media gateway and its status is maintained between the gateway control agent and the media gateway, the one-to-one correspondence of the resource capability on the media gateway set and its status is maintained between the media gateway controller and the gateway control agent, and the gateway control agent establishes mapping relations of the resource capabilities between the two planes and the mapping relations are accordingly corresponded to the operations.

Wherein, the gateway control agent further establishes the mapping relations of the operations on resource capabilities between the media gateway controller and the media gateway, and the operations on the resource capabilities comprise the allocation and release, and/or the characteristics amendment and the alteration notification, and/or the status maintenance and synchronization of the resource capabilities.

The present invention also provides a communication method of GCA, comprising the steps of: the media gateways registering to the gateway control agent set between the media gateway controller and the media gateways in the packet network, while the gateway control agent, representing the media gateway set, registering to the media gateway controller; the gateway control agent selecting the appropriate media gateway according to the service providing request sent from the media gateway controller and sending the command to the media gateway to request for providing the service; the media gateway sending the response command to the gateway control agent; and the gateway control agent operating according to the response command from the media gateway, sending the response command to the media gateway controller, and establishing mapping relations between the media gateway controller and the media gateways.

Wherein, the step of establishing mapping relations between the media gateway controller and the media gateways comprise establishing the mapping for terminations, and/or for contexts.

Wherein, the mapping for contexts comprises: the gateway control agent, representing the media gateway set, allocating and identifying a context in response to the request from the media gateway controller; the media gateway, representing itself, allocating and identifying a context in response to the request from the gateway control agent; and the gateway control agent establishing the mapping relations between the context allocated and identified by the gateway control agent and that allocated and identified by the media gateway and the mapping relations are accordingly corresponded to the operations.

Wherein, the mapping for terminations further comprises the mapping for physical terminations and for ephemeral terminations, wherein the mapping for physical terminations comprises: the one-to-one correspondence of the termination on the media gateway and its status is maintained between the gateway control agent and the media gateway, the one-to-one correspondence of the termination on the media gateway set and its status is maintained between the media gateway controller and the gateway control agent, and the gateway control agent establishes mapping relations of the physical terminations between the two planes and the mapping relations are accordingly corresponded to the operations, and the mapping for ephemeral terminations comprises: the allocation or release of the ephemeral termination between the gateway control agent and the media gateway is performed by the media gateway in response to the request from the gateway control agent, the allocation or release of the ephemeral termination between the media gateway controller and the gateway control agent is performed by the gateway control agent in response to the request from the media gateway controller, and the gateway control agent establishes mapping relations of the ephemeral terminations between the two planes and the mapping relations are accordingly corresponded to the operations.

Wherein, the operations comprise the operations on terminations and contexts, which comprise at least one of the following operations: adding a termination to a context, deleting a termination from a context, moving a termination between the contexts, modifying a termination, initiating notification from a termination, auditing a termination, and the service change of context and termination.

Wherein, the method further comprises that the gateway control agent establishes the mapping relations of the operations on the terminations and the context between the media gateway controller and the media gateway.

The advantages of the present invention are that the media gateway controller introduced by the present invention considers media gateways as a resource set and realizes hierarchical control and simplification operations without the care of the details of a certain MG.

### Brief Description of the Drawings

Figure 1 is the schematic diagram of a kind of MGC and MG networking in the packet network;
Figure 2 is a schematic diagram showing the principle of the GCA according to an embodiment of the present invention; and
Figure 3 is a schematic diagram showing the interactive routine between any two of the MGC, GCA and MG based on H. 248 protocol.

### Detailed Description of the Invention

The GCA in the present invention is an entity introduced between the MGC and MG and substitutes the MGC to control the MG. As for the MGC, the GCA represents the set of all the MGs managed by it and its resource capabilities correspond to the sum of those of the all the MGs managed by it. Therefore, the MGC may consider the GCA as MGs and request for service from the GCA. As for MGs, the GCA is the representative of the MGC so all MGs uniformly register to the GCA and the GCA representing MGs registers to the MGC, wherein the registration scheme adopted here is the existing registration scheme H. 248. The GCA will be able to provide services to the MGC as long as one MG registers to the MGC successfully.

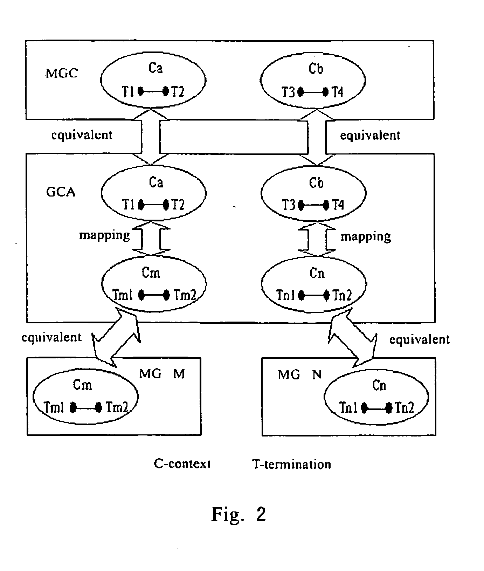

As to the detailed principle of the GCA, please refer to Figure 2. The understanding of the resource capabilities of the MG set by the GCA is the same as that by the MGC, i.e., the definition, range, form, identification and operation etc. of the resource capabilities of the MG set by the GCA are the same as those by the MGC. The understanding on the resource capabilities of the MG by the GCA is the same as that by the MG, i.e., the definition, range, form, identification and operation etc. of the resource capabilities of the MGs by the GCA are the same as those by the MG. The GCA establishes mapping relations between the two understandings and presents the resource capabilities of all the MGs managed by it to the MGC as an integrity, and thus the MGC doesn't need to care which MG provides a certain resource capability. The MGC requests for the resource capabilities providing certain service from the GCA, and then the GCA selects the resource capabilities satisfying the request from the MGs managed by it and performs mapping between the single MG region and the MG set region represented by the GCA, so that the control operation of the MGC on the resource capabilities of the MG set region represented by the GCA is mapped to the resource capabilities of the single MG region through the GCA.

The GCA establishes the mapping relations of varied resource capabilities between the MGC call model and the MG call model, which comprises the mapping for the termination and the context etc. The context represents the combination relation of terminations relative to a certain call, which is requested from the MGC to the MG and is allocated and identified by the MG. Therefore, the GCA, representing the MG set, allocates and identifies a context in response to the request from the MGC, and the MG, representing itself, allocates and identifies a context in response to the request from the GCA. The GCA establishes mapping relations of the contexts between the two planes and the mapping relations are accordingly corresponded to the operations. The physical terminations represent half-permanent physical entities such as the time division multiplex (TDM) channel. Therefore, the one-to-one correspondence of the termination on the MG and its status is maintained between the GCA and the MG; the one-to-one correspondence of the termination on the MG set and its status is maintained between the MGC and the GCA; and the GCA establishes mapping relations of the terminations between the two planes and the mapping relations are accordingly corresponded to the operations. The ephemeral termination represents common resources which are temporarily applied and released after usage such as the real-time transport protocol (RTP) stream. Therefore, the allocation or release of the ephemeral termination between the GCA and the MG is performed by the MG according to the request from the GCA; the allocation or release of the ephemeral termination between the MGC and the GCA is performed by the GCA according to the request from the MGC; and the GCA establishes mapping relations of the ephemeral terminations between the two planes and the mapping relations are accordingly corresponded to the operations. Accordingly, the GCA establishes the mapping relations of the operations of resource capabilities (such as the termination, context, etc.) between the two planes. The operations of the resource capabilities comprise the allocation and release of the resource capabilities, and/or the characteristics amendment and the alteration notification of the resource capabilities, and/or status maintenance and synchronization of the resource capabilities, specifically, adding a termination to a context, deleting a termination from a context, moving a termination between the contexts, modifying a termination, initiating notification from a termination, auditing a termination, or the service change of context and termination, etc..

The implementation method of the GCA based on H. 248 protocol according to the present invention comprises the following basic steps: firstly, a GCA is set between the MGC and a plurality of MGs in the packet network, wherein the MGs uniformly register to the GCA, and GCA representing the MGs registers to the MGC. When the MGC requests a MG to provide services, the MGC will send a command to the GCA requesting for a certain service; the GCA selects the appropriate MG according to the service providing request sent from the MGC and sends the request to the MG for the service; the MG sends the response command to the GCA; the GCA operates according to the response from the MG, then sends the response command to the MGC, and the GCA establishes mapping relations between the MGC and the MG. An example will be given for the purpose of illustrating the implementing procedure of present invention.

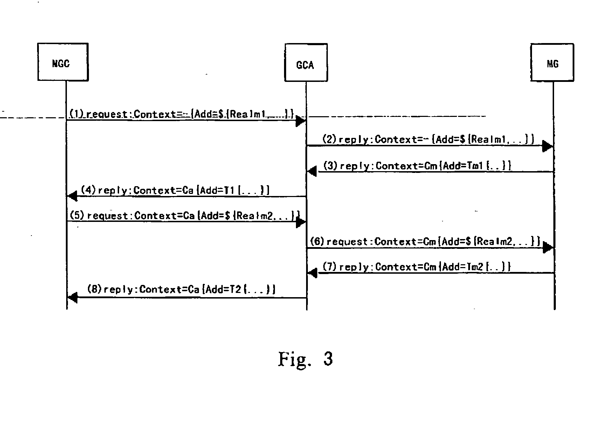

Figure 3 is the schematic diagram showing the interactive routine between the MGC, GCA and MG based on H. 248 protocol, which explains the process of creating the context including two ephemeral terminations (aiming at different IP domain respectively):
Step 1: the MGC sends Add request command to the GCA, wherein the identifier "―" for the context means to request the GCA to allocate a context, the identifier "$" for the termination means to add an ephemeral termination within the context and the identifier "Realm1" for the IP domain indicates the IP domain for the ephemeral termination.
Step 2: the GCA selects the appropriate MG according to the request from the MGC and sends the Add request command to the MG, wherein the identifier "―" for the context means to request the MG to allocate a context, the identifier "$" for the termination means to add an ephemeral termination within the context and the identifier "Realm1" for the IP domain indicates the IP domain for the ephemeral termination.
Step 3: the MG sends the Add reply command to the GCA, wherein identifier "Cm" for the context indicates the context allocated by the MG, and the identifier "Tm1" for the termination indicates the ephemeral termination added within the context by the MG.
Step 4: the GCA determines whether the Add request sent by the GCA is successful according to the reply from the MG, and if successful sends Add response command to the MGC, wherein the identifier "Ca" for the context indicates the context allocated by the GCA, and the identifier "T1" for the termination indicates the ephemeral termination added within the context by the GCA. At the same time, the GCA establishes the mapping relations between the context Ca and context Cm and between the termination T1 and termination Tm1.
Step 5: the MGC sends the Add request command to the GCA, wherein the identifier "Ca" for the context indicates the object context, the identifier "$" for the termination means to add an ephemeral termination within the context and the identifier "Realm2" for the IP domain indicates the IP domain for the ephemeral termination.
Step 6: the GCA finds the MG where the context Cm, corresponding to the context Ca, exists according to the request from the MGC and sends the Add request command to the MG, wherein the identifier "Cm" for the context indicates the object context, the identifier "$" for the termination means to add an ephemeral termination within the context and the sign "Realm2" for the IP domain indicates the IP domain for the ephemeral termination.
Step 7: the MG sends the Add reply command to the GCA, wherein the identifier "Cm" for the context indicates the object context and the identifier "Tm2" for the termination indicates the ephemeral termination added within the context by the MG.
Step 8: the GCA determines whether the Add request sent by the GCA is successful according to the reply from the MG, and if successful sends the Add response command to the MGC, wherein the identifier "Ca" for the context indicates the object context, and the identifier "T2" for the termination indicates the ephemeral termination added within the context by the GCA. At the same time, the GCA establishes the mapping relations between T2 and Tm2.

The above steps all omit the other information such as the media parameters of the ephemeral termination.

## Claims

1. A gateway control agent for establishing mapping relations between a media gateway controller and media gateways, comprising:
means for selecting appropriate resource capabilities among the set of media gateways managed by the gateway control agent, when the media gateway controller uniformly requests for a certain service from the gateway control agent; and
means for performing mapping between a single media gateway region and media gateway set region represented by the gateway control agent, such that control operation by the media gateway controller on the resource capabilities in the media gateway set region represented by the gateway control agent is mapped in mapping relations to the resource capabilities of the single media gateway region by the gateway control agent.

2. The gateway control agent as defined in claim 1, wherein:
the mapping relations between the media gateway controller and the media gateways comprise the mapping for varied resource capabilities.

3. The gateway control agent as defined in claim 2, wherein:
the gateway control agent comprises means to identify or operate a certain resource capability in response to the request from the media gateway controller;
the media gateway identifies or operates a certain resource capability in response to the request from the gateway control agent; and
the gateway control agent comprising means to establish mapping relations between the resource capability identified by the gateway control agent and that identified by the media gateway and to accordingly correspond the mapping relations to the operations.

4. The gateway control agent as defined in claim 2: comprising means to maintain one-to-one correspondence of the resource capability on a media gateway and its status between the gateway control agent and the media gateway, to maintain one-to-one correspondence of the resource capability on the media gateway set and its status between the media gateway controller and the gateway control agent, and
to establishe mapping relations of the resource capabilities between the two planes and to accordingly correspond the mapping relations to the operations.

5. The gateway control agent as defined in any one from claim 1 to claim 4, wherein:
the gateway control agent further comprises means to establish mapping relations of operations on resource capabilities between the media gateway controller and the media gateway, and
the operations on the resource capabilities comprise the allocation and release, and/or the characteristics amendment and the alteration notification, and/or the status maintenance and synchronization of the resource capabilities.

6. An communication method of a gateway control agent, comprises the steps of:
a set of media gateways registering to the gateway control agent set between a media gateway controller and the media gateways in the packet network, while the gateway control agent, representing the media gateways set, registering to the media gateway controller;
the gateway control agent selecting an appropriate media gateway according to a service providing request sent from the media gateway controller and sending a command to the media gateway to request for providing the service;
the media gateway sending a response command to the gateway control agent; and
the gateway control agent operating according to the response command from the media gateway, sending a response command to the media gateway controller, and establishing mapping relations between the media gateway controller and the media gateways.

7. The communication method of the gateway control agent as defined in claim 6, wherein:
the step of establishing mapping relations between the media gateway controller and the media gateways comprises establishing mapping for terminations, and/or for contexts.

8. The communication method of the gateway control agent as defined in claim 7, wherein the mapping for contexts comprises:
the gateway control agent, representing the media gateway set, allocating and identifying a context in response to the request from the media gateway controller;
the media gateway, representing itself, allocating and identifying a context in response to the request from the gateway control agent; and
the gateway control agent establishing mapping relations between the context allocated and identified by the gateway control agent and that allocated and identified by the media gateway and the mapping relations are accordingly corresponded to the operations.

9. The communication method of the gateway control agent as defined in claim 7, wherein the mapping for terminations further comprises mapping for physical terminations and for ephemeral terminations, wherein
the mapping for physical terminations comprises:
one-to-one correspondence of the termination on the media gateway and its status is maintained between the gateway control agent and the media gateway;
one-to-one correspondence of the termination on the media gateway set and its status is maintained between the media gateway controller and the gateway control agent;
the gateway control agent establishes mapping relations of the physical terminations between two planes and the mapping relations are accordingly corresponded to the operations; and
the mapping for ephemeral terminations comprises:
allocation or release of the ephemeral termination between the gateway control agent and the media gateway is performed by the media gateway in response to the request from the gateway control agent;
allocation or release of the ephemeral termination between the media gateway controller and the gateway control agent is performed by the gateway control agent in response to the request from the media gateway controller; and
the gateway control agent establishes mapping relations of the ephemeral terminations between the two planes and the mapping relations are accordingly corresponded to operations.

10. The communication method of the gateway control agent as defined in any one from claim 6 to 9, wherein:
the operations comprise the operations on terminations and contexts, which comprise at least one of the following operations: adding a termination to a context, deleting a termination from a context, moving a termination between the contexts, modifying a termination, initiating notification from a termination, auditing a termination, and the service change of context and termination.

11. The communication method of the gateway control agent as defined in claim 10, wherein
the method further comprises that the gateway control agent establishes the mapping relations of the operations on the terminations and the context between the media gateway controller and the media gateway.

## Patentansprüche

1. Gateway-Steuereinrichtung zur Errichtung von Abbildungsrelationen zwischen einem Media Gateway Controller und Media Gateways, umfassend:
Mittel zur Wahl geeigneter Ressourcenfähigkeiten aus einem Satz Media Gateways, die von der Gateway-Steuereinrichtung verwaltet werden, wenn der Media Gateway Controller eine einheitliche Anforderung für einen bestimmten Dienst an die Gateway-Steuereinrichtung richtet; und
Mittel zur Durchführung der Abbildung zwischen einer einzelnen Media Gateway Region und einer Media-Gateway-Satz-Region, die durch die Gateway-Steuereinrichtung repräsentiert wird, sodass der Steuerablauf des Media Gateway Controllers betreffend die Ressourcenfähigkeiten in der Media-Gateway-Satz-Region, die durch die Gateway-Steuereinrichtung repräsentiert wird, von der Gateway-Steuereinrichtung über Abbildungsrelationen auf die Ressourcenfähigkeiten der einzelnen Media Gateway Region abgebildet wird.

2. Gateway-Steuereinrichtung nach Anspruch 1, wobei:
die Abbildungsrelationen zwischen dem Media Gateway Controller und den Media Gateways die Abbildung unterschiedlicher Ressourcenfähigkeiten umfassen.

3. Gateway-Steuereinrichtung nach Anspruch 2, wobei:
die Gateway-Steuereinrichtung Mittel zur Identifizierung oder zum Betrieb bestimmter Ressourcenfähigkeiten als Reaktion auf die Anforderung des Media Gateway Controllers umfasst;
der Media Gateway als Reaktion auf die Anforderung der Gateway-Steuereinrichtung eine bestimmte Ressourcenfähigkeit identifiziert oder betreibt; und
die Gateway-Steuereinrichtung Mittel zur Errichtung von Abbildungsrelationen zwischen der Ressourcenfähigkeit, die von der Gateway-Steuereinrichtung identifiziert wurde, und der, die vom Media Gateway identifiziert wurde, umfasst und die Abbildungsrelationen entsprechend an die Abläufe anpasst.

4. Gateway-Steuereinrichtung nach Anspruch 2, umfassend Mittel zur:
Aufrechterhaltung einer Eins-zu-eins-Übereinstimmung der Ressourcenfähigkeit an einem Media Gateway und ihres Status zwischen der Gateway-Steuereinrichtung und dem Media Gateway,
Aufrechterhaltung einer Eins-zu-eins-Übereinstimmung der Ressourcenfähigkeit am Satz Media Gateways und ihres Status zwischen dem Media Gateway Controller und der Gateway-Steuereinrichtung, und
Errichtung von Abbildungsrelationen der Ressourcenfähigkeiten zwischen den zwei Ebenen und entsprechende Anpassung der Abbildungsrelationen an die Abläufe.

5. Gateway-Steuereinrichtung nach einem der vorhergehenden Ansprüche 1 bis 4, wobei:
die Gateway-Steuereinrichtung weiterhin Mittel zur Errichtung von Abbildungsrelationen für Abläufe an Ressourcenfähigkeiten zwischen dem Media Gateway Controller und dem Media Gateway umfasst und
die Abläufe an den Ressourcenfähigkeiten die Zuweisung und Freigabe und/oder die Kennungsabänderung und Änderungsmitteilung und/oder die Statuserhaltung und Synchronisierung der Ressourcenfähigkeiten umfasst.

6. Kommunikationsverfahren einer Gateway-Steuereinrichtung, umfassend folgende Schritte:
Anmelden eines Satzes Media Gateways am Gateway-Steuereinrichtung-Satz zwischen einem Media Gateway Controller und den Media Gateways in einem paketvermittelten Netzwerk, während sich die Gateway-Steuereinrichtung, die den Satz Media Gateways repräsentiert, am Media Gateway Controller anmeldet;
Wahl eines geeigneten Media Gateways durch die Gateway-Steuereinrichtung entsprechend einer Anforderung nach Bereitstellung eines Dienstes, die von dem Media Gateway Controller gesendet wurde, und Senden eines Befehls an den Media Gateway mit der Anforderung zur Bereitstellung des Dienstes;
Senden eines Antwortbefehls des Media Gateways an die Gateway-Steuereinrichtung und
Betrieb der Gateway-Steuereinrichtung entsprechend des Antwortbefehls des Media Gateways, Senden eines Antwortbefehls an den Media Gateway Controller und Errichten von Abbildungsrelationen zwischen dem Media Gateway Controller und den Media Gateways.

7. Kommunikationsverfahren der Gateway-Steuereinrichtung nach Anspruch 6, wobei:
der Schritt des Errichtens von Abbildungsrelationen zwischen dem Media Gateway Controller und den Media Gateways das Errichten einer Abbildung von Beendigungen und/oder Kontexten umfasst.

8. Kommunikationsverfahren der Gateway-Steuereinrichtung nach Anspruch 7, wobei das Abbilden von Kontexten Folgendes umfasst:
Zuweisen und Identifizieren eines Kontextes durch die Gateway-Steuereinrichtung, die den Satz Media Gateways repräsentiert, als Reaktion auf die Anforderung vom Media Gateway Controller;
Zuweisen und Identifizieren eines Kontexts durch den Media Gateway, der sich selbst repräsentiert, als Reaktion auf die Anforderung der Gateway-Steuereinrichtung und
Errichten von Abbildungsrelationen zwischen dem Kontext, der von der Gateway-Steuereinrichtung zugewiesen und identifiziert wurde, und dem, der vom Media Gateway zugewiesen identifiziert wurde, und entsprechendes Anpassen der Abbildungsrelationen an die Abläufe.

9. Kommunikationsverfahren der Gateway-Steuereinrichtung nach Anspruch 7, wobei das Abbilden von Beendigungen weiterhin das Abbilden von physikalischen Beendigungen und flüchtigen Beendigungen umfasst, wobei:
die Abbildung von physikalischen Beendigungen Folgendes umfasst:
Eins-zu-eins-Übereinstimmung der Beendigung am Media Gateway und Aufrechterhaltung des Status zwischen der Gateway-Steuereinrichtung und dem Media Gateway,
Eins-zu-eins-Übereinstimmung der Beendigung am Satz Media Gateways und Aufrechterhaltung des Status zwischen dem Media Gateway Controller und der Gateway-Steuereinrichtung,
Errichten von Abbildungsrelationen der physikalischen Beendigungen zwischen zwei Ebenen durch die Gateway-Steuereinrichtung und entsprechende Anpassung der Abbildungsrelationen an die Abläufe; und
die Abbildung von flüchtigen Beendigungen Folgendes umfasst:
Durchführen der Zuweisung oder Freigabe der flüchtigen Beendigung zwischen der Gateway-Steuereinrichtung und dem Media Gateway durch den Media Gateway als Reaktion auf die Anforderung von der Gateway-Steuereinrichtung;
Durchführen der Zuweisung oder Freigabe der flüchtigen Beendigung zwischen der Gateway-Steuereinrichtung und dem Media Gateway durch die Gateway-Steuereinrichtung als Reaktion auf die Anforderung von des Media Gateway Controllers; und
Errichten von Abbildungsrelationen der flüchtigen Beendigungen zwischen den zwei Ebenen durch die Gateway-Steuereinrichtung und entsprechende Anpassung der Abbildungsrelationen an die Abläufe.

10. Kommunikationsverfahren der Gateway-Steuereinrichtung nach einem der Ansprüche 6 bis 9, wobei:
die Abläufe die Abläufe für Beendigungen und Kontexten umfassen, die mindestens einen der folgenden Abläufe umfassen: Hinzufügen einer Beendigung zu einem Kontext, Löschen einer Beendigung aus einem Kontext, Verschieben einer Beendigung zwischen den Kontexten, Bearbeiten einer Beendigung, Einleiten einer Mitteilung von einer Beendigung, Prüfen einer Beendigung und Dienständerung von Kontext und Beendigung.

11. Kommunikationsverfahren der Gateway-Steuereinrichtung nach Anspruch 10, wobei
das Verfahren weiterhin die Errichtung der Abbildungsrelationen der Abläufe für die Beendigungen und die Kontexte zwischen dem Media Gateway Controller und dem Media Gateway durch die Gateway-Steuereinrichtung umfasst.

## Revendications

1. Agent de commande de passerelles pour établir des relations de mappage entre un contrôleur de passerelles média et des passerelles média, comprenant :
un moyen pour sélectionner des capacités de ressources appropriées parmi l'ensemble de passerelles média gérées par l'agent de commande de passerelles lorsque le contrôleur de passerelles média demande un certain service auprès de l'agent de commande de passerelles ; et
un moyen pour effectuer un mappage entre une région de passerelle média unique et une région d'ensemble de passerelles média représentée par l'agent de commande de passerelles, de sorte que l'opération de commande par le contrôleur de passerelles média sur les capacités de ressources dans la région d'ensemble de passerelles média représentée par l'agent de commande de passerelles soit mappée dans des relations de mappage sur les capacités de ressources de la région de passerelle média unique par l'agent de commande de passerelles.

2. Agent de commande de passerelles selon la revendication 1, dans lequel :
les relations de mappage entre le contrôleur de passerelles média et les passerelles média comprennent le mappage pour diverses capacités de ressources.

3. Agent de commande de passerelles selon la revendication 2, dans lequel :
l'agent de commande de passerelles comprend un moyen pour identifier ou actionner une certaine capacité de ressources en réponse à la demande du contrôleur de passerelles média ;
la passerelle média identifie ou actionne une certaine capacité de ressources en réponse à la demande de l'agent de commande de passerelles ; et
l'agent de commande de passerelles comprend un moyen pour établir des relations de mappage entre la capacité de ressources identifiée par l'agent de commande de passerelles et celle identifiée par la passerelle média et pour faire correspondre en conséquence les relations de mappage aux opérations.

4. Agent de commande de passerelles selon la revendication 2, comprenant un moyen pour
maintenir une correspondance bi-univoque de la capacité de ressources sur une passerelle média et son état entre l'agent de commande de passerelles et la passerelle média,
maintenir une correspondance bi-univoque de la capacité de ressources sur l'ensemble de passerelles média et son état entre le contrôleur de passerelles média et l'agent de commande de passerelles, et
établir des relations de mappage des capacités de ressources entre les deux plans et faire correspondre en conséquence les relations de mappage aux opérations.

5. Agent de commande de passerelles selon l'une quelconque des revendications 1 à 4, dans lequel :
l'agent de commande passerelles comprend en outre un moyen pour établir des relations de mappage des opérations sur les capacités de ressources entre le contrôleur de passerelles média et la passerelle média, et
les opérations sur les capacités de ressources comprennent l'allocation et la libération, et/ou la modification des caractéristiques et la notification de modification, et/ou la maintenance d'état et la synchronisation des capacités de ressources.

6. Procédé de communication d'un agent de commande de passerelles, comprenant les étapes consistant en:
un ensemble de passerelles média s'enregistrent auprès de l'agent de commande de passerelles placé entre un contrôleur de passerelles média et les passerelles média dans le réseau de paquets, tandis que l'agent de commande de passerelles, représentant l'ensemble de passerelles média, s'enregistre auprès du contrôleur de passerelles média ;
l'agent de commande de passerelles sélectionne une passerelle média appropriée selon une demande de fourniture de service envoyée depuis le contrôleur de passerelles média et envoie une commande à la passerelle média pour demander la fourniture du service ;
la passerelle média envoie une commande de réponse à l'agent de commande de passerelles ; et
l'agent de commande de passerelles opère selon la commande de réponse de la passerelle média, envoie une commande de réponse au contrôleur de passerelles média, et établit des relations de mappage entre le contrôleur de passerelles média et les passerelles média.

7. Procédé de communication de l'agent de commande de passerelles selon la revendication 6, dans lequel :
l'étape d'établissement de relations de mappage entre le contrôleur de passerelles média et les passerelles média comprend l'établissement d'un mappage pour des terminaisons et/ou pour des contextes.

8. Procédé de communication de l'agent de commande de passerelles selon la revendication 7, dans lequel le mappage pour les contextes comprend le fait que :
l'agent de commande de passerelles, représentant l'ensemble de passerelles média, alloue et identifie un contexte en réponse à la demande du contrôleur de passerelles média ;
la passerelle média, représentant elle-même, alloue et identifie un contexte en réponse à la demande de l'agent de commande de passerelles ; et
l'agent de commande de passerelles établisse des relations de mappage entre le contexte alloué et identifié par l'agent de commande de passerelles et celui alloué et identifié par la passerelle média et les relations de mappage soient mises en correspondance en conséquence avec les opérations.

9. Procédé de communication de l'agent de commande passerelles selon la revendication 7, dans lequel le mappage pour les terminaisons comprend en outre le mappage pour les terminaisons physiques et pour les terminaisons éphémères, dans lequel
le mappage pour les terminaisons physiques comprend le fait que :
une correspondance bi-univoque de la terminaison sur la passerelle média et son état soit maintenue entre l'agent de commande de passerelles et la passerelle média ;
une correspondance bi-univoque de la terminaison sur l'ensemble de passerelles média et son état soit maintenue entre le contrôleur de passerelles média et l'agent de commande de passerelles ;
l'agent de commande de passerelles établisse des relations de mappage des terminaisons physiques entre deux plans et les relations de mappage soient mises en correspondance en conséquence avec les opérations ; et
le mappage pour les terminaisons éphémères comprend le fait que :
l'allocation ou la libération de la terminaison éphémère entre l'agent de commande de passerelles et la passerelle média soit effectuée par la passerelle média en réponse à la demande de l'agent de commande de passerelles ;
l'allocation ou la libération de la terminaison éphémère entre le contrôleur de passerelles média et l'agent de commande de passerelles soit effectuée par l'agent de commande de passerelles en réponse à la demande du contrôleur de passerelles média ; et
l'agent de commande de passerelles établisse des relations de mappage des terminaisons éphémères entre les deux plans et les relations de mappage soient mises en correspondance en conséquence avec les opérations.

10. Procédé de communication de l'agent de commande de passerelles selon l'une quelconque des revendications 6 à 9, dans lequel :
les opérations comprennent les opérations sur les terminaisons et les contextes, qui comprennent au moins une des opérations suivantes : ajout d'une terminaison à un contexte, suppression d'une terminaison d'un contexte, déplacement d'une terminaison entre les contextes, modification d'une terminaison, déclenchement d'une notification à partir d'une terminaison, audit d'une terminaison, et le changement de service de contexte et de terminaison.

11. Procédé de communication de l'agent de commande de passerelles selon la revendication 10, dans lequel
le procédé comprend en outre le fait que l'agent de commande de passerelles établisse les relations de mappage des opérations sur les terminaisons et le contexte entre le contrôleur de passerelles média et la passerelle média.
